# EUROPEAN PATENT APPLICATION

(11) **EP 4 373 154 A1**
(43) Date of publication of application: **22.05.2024**
(21) Application number: 21949736.9
(22) Date of filing: 16.07.2021
(51) Int. Cl.: H04W 24/10

(54) **COMMUNICATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); YANG, Xing, Beijing 100085 (CN)
(74) Representative: Hughes, Andrea Michelle
(86) International application number: PCT/CN2021/106912
(87) International publication number: WO 2023/283953

(57) **Abstract**

The present disclosure provides a communication processing method and apparatus, a communication device and a storage medium. The communication processing method is performed by a UE, and comprises: in response to an AI prediction result satisfying a network configuration, triggering the UE to perform an operation corresponding to the network configuration. In the embodiments of the present disclosure, the AI prediction result may be obtained at the UE side, and then the AI prediction result, an AI model and data for obtaining the AI prediction result, and so on may be maintained locally at the UE without uploading the data for obtaining the AI prediction result, the AI prediction result, or the like to a network, so that the risk of data leakage may be reduced, which improves data security, and the wireless communication load may also be reduced.

## Description

### TECHNICAL FIELD

The present disclosure relates to a field of communication technologies, and particularly to a method and an apparatus for communication processing, device, a device for communication, and a storage medium.

### BACKGROUND

With the progress of society and the development of economy, a user is placing higher and higher demands on a wireless network, and the deployment of the network has become more and more complicated. In order to adapt to changing technology, the wireless network is incorporating more and more intelligence. The rapid development of artificial intelligence (AI) technology further provides technical support for an intelligent communication network. Currently, the intelligent communication network is already an indispensable part, so it is an inevitable trend to apply AI technology to the wireless network.

Machine learning algorithms are one of the most important implementation methods of artificial intelligence technology. Machine learning can obtain modules through a large amount of training data, and events can be predicted through modules. In many fields, the modules trained by machine learning can obtain more accurate output results. At present, AI enhancement based on the network side has been studied.

Although the AI at the network side can obtain more data, the user equipment (UE) can obtain more UE information. An AI module of a UE is more conducive to improving user experience. On the one hand, considering personal privacy and data volume, it is impossible for the UE to report all the information to the network. On the other hand, the network will train common modules for all UEs instead of customizing the AI module for each UE. A Generic module would not provide a best user experience.

### SUMMARY

Embodiments of the present disclosure provide a method and an apparatus for communication processing, a device for communication, and a storage medium.

According to a first aspect of embodiments of the present disclosure, there is provided a method for communication processing. The method is performed by a UE, and includes:
triggering the UE to perform an operation corresponding to a network configuration in response to an artificial intelligence AI prediction result satisfying the network configuration.

According to a second aspect of embodiments of the present disclosure, there is provided a method for communication processing. The method is performed by a network device, and includes:
transmitting a network configuration.

The network configuration and an artificial intelligence AI prediction result obtained by a UE are used by the UE for triggering the UE to perform an operation corresponding to the network configuration in response to determining that the AI prediction result satisfies the network configuration.

According to a third aspect of embodiments of the present disclosure, there is provided an apparatus for communication processing. The apparatus is applied to a UE, and includes:
a processing module, configured to trigger the UE to perform an operation corresponding to a network configuration in response to an AI prediction result satisfying the network configuration.

According to a fourth aspect of embodiments of the present disclosure, there is provided an apparatus for communication processing. The apparatus is applied to a network device, and includes:
a transmission module, configured to transmit a network configuration.

The network configuration and an AI prediction result obtained by the UE are used by the UE for triggering the UE to perform an operation corresponding to the network configuration in response to determining that the AI prediction result satisfies the network configuration.

According to a fifth aspect of embodiments of the present disclosure, there is provided a device for communication. The device includes:
a processor;
a memory for storing instructions executable by the processor;
in which the processor is configured to implement the method for communication processing according to any embodiment of the present disclosure when running the executable instructions.

According to a sixth aspect of embodiments of the present disclosure, there is provided a computer storage medium. The computer storage medium stores a computer executable program. When the executable program is executed by a processor, the method for communication processing according to any embodiment of the present disclosure is implemented.

The technical solutions provided by the embodiments of the present disclosure may include the following beneficial effects:

In the embodiments of the present disclosure, the UE is triggered to perform the operation corresponding to the network configuration in response to the AI prediction result satisfying the network configuration. In the embodiments of the present disclosure, the AI prediction result can be obtained on the UE side, such that the AI prediction result, the AI model and data for obtaining the AI prediction result, etc., can be maintained locally in the UE, without uploading the data for obtaining the AI prediction result or AI prediction result to the network. Thereby, the risk of data leakage can be reduced, data security can be improved, and wireless communication load can also be reduced.

It should be understood that both the foregoing general description and the following detailed description are exemplary and explanatory only, and are not intended to limit the embodiments of the present disclosure.

### BRIEF DESCRIPTION OF THE DRAWINGS

Fig. 1 is a schematic structural diagram of a wireless communication system.
Fig. 2 is a schematic diagram showing a method for communication processing according to an exemplary embodiment.
Fig. 3 is a schematic diagram showing a method for communication processing according to an exemplary embodiment.
Fig. 4 is a schematic diagram showing a method for communication processing according to an exemplary embodiment.
Fig. 5 is a schematic diagram showing a method for communication processing according to an exemplary embodiment.
Fig. 6 is a schematic diagram showing a method for communication processing according to an exemplary embodiment.
Fig. 7 is a block diagram of an apparatus for communication processing according to an exemplary embodiment.
Fig. 8 is a block diagram of an apparatus for communication processing according to an exemplary embodiment.
Fig. 9 is a block diagram of a UE according to an exemplary embodiment.
Fig. 10 is a block diagram of a base station according to an exemplary embodiment.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the disclosed embodiments as recited in the appended claims.

Terms used in the embodiments of the present disclosure are for the purpose of describing specific embodiments only, and are not intended to limit the embodiments of the present disclosure. As used in the examples of the present disclosure and the appended claims, the singular forms "a" and "an" are also intended to include the plural unless the context clearly dictates otherwise. It should also be understood that the term "and/or" as used herein refers to and includes any and all possible combinations of one or more of the associated listed items.

It should be understood that although the embodiments of the present disclosure may use the terms first, second, third, etc. to describe various information, the information should not be limited to these terms. These terms are only used to distinguish information of the same type from one another. For example, without departing from the scope of the embodiments of the present disclosure, first information may also be called second information, and similarly, second information may also be called first information. Depending on the context, the word "if' as used herein may be interpreted as "when" or "while" or "in response to determining".

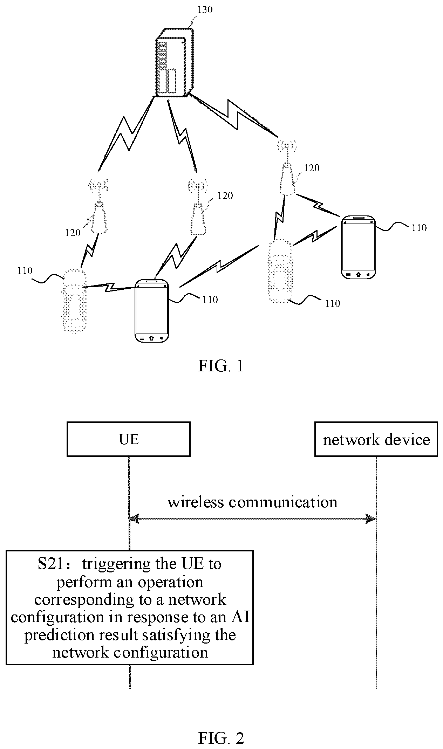

Please refer to Fig. 1, which shows a schematic structural diagram of a wireless communication system provided by an embodiment of the present disclosure. As shown in Fig. 1, the wireless communication system is a communication system based on cellular mobile communication technology, and the wireless communication system may include several user equipment 110 and several base stations 120.

The user equipment 110 may be a device that provides voice and/or data connectivity to a user. The user equipment 110 can communicate with one or more core networks via a radio access network (RAN), and the user equipment 110 can be an Internet to Things user equipment, such as a sensor device, a mobile phone (or called a "cellular" phone) and a computer with an Internet to Things user equipment, which may be, for example, a fixed, a portable, a pocket, a hand-held, a built-in computer or onboard apparatus. For example, a station (STA), a subscriber unit, a subscriber station, a mobile station, a mobile, a remote station, an access point, a remote terminal, an access user terminal, a user terminal, a user agent, a user device, or a user equipment. Alternatively, the user equipment 110 may also be a device of an unmanned aerial vehicle. Alternatively, the user equipment 110 may also be an onboard device, such as, a trip computer with a wireless communication function, or a wireless user device connected externally to a trip computer. Alternatively, the user equipment 110 may also be a roadside device, for example, a street lamp, a signal lamp, or other roadside devices with a wireless communication function.

The base station 120 may be a network side device in a wireless communication system. The wireless communication system may be the 4th generation mobile communication (4G) system, also known as a long term evolution (LTE) system; or, the wireless communication system may also be a 5G system, also known as a new air interface system or 5G NR system. Alternatively, the wireless communication system may also be a next-generation system of the 5G system. The access network in the 5G system may be called a new generation radio access network (NG-RAN).

The base station 120 may be an evolved base station (eNB) adopted in a 4G system. Alternatively, the base station 120 may also be a base station (gNB) adopting a centralized distributed architecture in the 5G system. When the base station 120 adopts a centralized distributed architecture, it generally includes a central unit (CU) and at least two distributed units (DUs). The centralized unit is provided with a packet data convergence protocol (PDCP) layer, a radio link layer control (RLC) layer, a media access control (MAC) layer protocol stack. The distributed unit is provided with a physical (PHY) layer protocol stack. The embodiments of the present disclosure do not limit the specific implementation manner of the base station 120.

A wireless connection may be established between the base station 120 and the user equipment 110 through a wireless air interface. In different implementations, the wireless air interface is a wireless air interface based on the fourth generation mobile communication (4G) standard, or the wireless air interface is a wireless air interface based on the fifth generation mobile communication (5G) standard, for example, the wireless air interface is a new air interface. Alternatively, the wireless air interface may also be a wireless air interface based on a standard of a next generation mobile communication of 5G.

In some embodiments, an E2E (End to End) connection may also be established between the user equipment 110, for example, a vehicle to vehicle (V2V) communication, a vehicle to infrastructure (V2I) communication and a vehicle to pedestrian (V2P) communication, and other scenes in a vehicle to everything (V2X) communication.

Herein, the above user equipment may be regarded as the terminal device in the following embodiments.

In some embodiments, the foregoing wireless communication system may further include a network management device 130.

Several base stations 120 are connected to the network management device 130 respectively. The network management device 130 may be a core network device in a wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF) or a home subscriber server (HSS), etc. The implementation form of the network management device 130 is not limited in the embodiments of the present disclosure.

As shown in FIG. 2, embodiments of the present disclosure provide a method for communication processing. The method is performed by a UE, and includes:
Step S21: triggering the UE to perform an operation corresponding to a network configuration in response to an AI prediction result satisfying the network configuration.

In an embodiment, the UE may be various mobile terminals or fixed terminals. For example, the UE may be, but not limited to, a mobile phone, a computer, a server, a wearable device, a game control platform, or a multimedia device.

Exemplarily, the UE obtains the AI prediction result and the trigger event of the network configuration; the UE determines whether the AI prediction result satisfies the trigger event, and if so, the UE is triggered to perform the operation corresponding to the trigger event.

Embodiments of the present disclosure provide a method for communication processing. The method is performed by a UE, and includes: receiving configuration information transmitted by a network device. The configuration information at least includes: information on a trigger event.

In an embodiment, the network device may be an access network device or a core network device.

In an embodiment, the access network device may be, but not limited to, a base station. The base station may be an interface device for the UE to access the Internet. The base station may be various types of base stations. For example, the base station may be a 3G base station, a 4G base station, a 5G base station or other evolved base stations.

In an embodiment, the core network device may be, but not limited to, various physical or logical entities of the core network; for example, the core network device may be a mobility management entity or a serving gateway.

Taking the base station as an example here, receiving by the UE the information transmitted by the core network device may refer to: the core network device first transmits the information to the base station, and then the UE receives the information transmitted by the core network device and forwarded by the base station. Transmitting information from the UE to the core network device may refer to: the UE transmits the information to the base station, and then the base station forwards the information to the core network device.

In an embodiment, the AI prediction result is obtained according to the AI model. Exemplarily, the UE may input service type information and historical measurement information of the UE into the AI model to obtain the AI prediction result. The UE service type information here may be, but not limited to, a first traffic service or a first delay service of the UE, a predetermined trajectory and/or moving direction of the UE, and the like. The first traffic service here may be a service with a traffic greater than a traffic threshold. The first delay service here may be a service with a delay smaller than a delay threshold. The historical measurement information here may be an AI prediction result measured based on the AI model, or a measurement result obtained based on RRM measurement.

In an embodiment, the UE configures a measurement period for the AI model. Exemplarily, the UE provides the AI model the measurement period, and the AI model performs periodic measurement with the measurement period to obtain an AI prediction result.

In another embodiment, the measurement period of the AI model may also be stipulated based on a communication protocol or configured by the network. Exemplarily, the communication protocol stipulates a prediction frequency, and then the measurement period of the AI model may be determined based on the prediction frequency. Exemplarily, the UE receives predicted frequency information transmitted by the network device, and determines the measurement period based on the predicted frequency information.

In this way, in the embodiments of the present disclosure, the measurement period can be configured for the AI model by the UE, the network or the communication protocol, which can be adapted to determine the AI measurement period in more scenarios.

In an embodiment, the AI prediction result is a prediction result for RRM.

In an embodiment, the AI prediction result includes: a prediction result for at least one prediction object and a prediction parameter.

In an embodiment, the prediction object includes but not limited to: a cell identity or a frequency point.

Exemplarily, the AI prediction result is a prediction result for a cell identifier and at least one prediction parameter in the cell.

Exemplarily, the AI prediction result is a prediction result for multiple cell identities and at least one prediction parameter in the multiple cells.

Exemplarily, the AI prediction result is a prediction result for a cell identity at a certain frequency point and at least one prediction parameter in the cell.

Exemplarily, the AI prediction result is a prediction result for one or more cell identities at multiple frequency points and at least one prediction parameter in these cells.

In an embodiment, the AI prediction result includes: a prediction result for the RRM prediction parameter of the UE. The AI prediction result here does not have a specific prediction object. The AI prediction result here is a prediction for characteristics of the UE itself. For example, when the measurement object is empty and the prediction parameter belongs to the RRM prediction parameter of the UE, the AI prediction result is a prediction result for the RRM prediction parameter. Exemplarily, the AI prediction result may be a prediction result for at least one of UE service, movement trajectory, movement direction, quality of service (QoS), or quality of experience (QoE).

In an embodiment, the prediction parameter include but is not limited to at least one of:
a prediction parameter of the RRM of UE;
a prediction parameter of the UE continuing to camp on a serving cell;
a prediction parameter of the UE accessing a neighboring cell.

In an embodiment, the prediction parameter of the RRM of the UE includes but is not limited to at least one of:
an occurrence probability of a first traffic service of the UE within a predetermined time; in which traffic of the first traffic service is greater than a traffic threshold;
an occurrence probability of a first delay service of the UE within a predetermined time; in which a delay of the first delayed service is less than a delay threshold;
a trajectory and direction of movement of the UE within a predetermined time;
a required parameter of quality of service (QoS) of the UE within a predetermined time; or
a required parameter of quality of experience (QoE) of the UE within a predetermined time.

In an embodiment, the prediction parameter of the UE camping on a serving cell includes but is not limited to at least one of:
an occurrence probability of radio link failure of the UE within a predetermined period;
an occurrence probability of a communication interruption or call drop of the UE within a predetermined time;
an occurrence probability of QoS or QoE not satisfying a required parameter of the UE within a predetermined time;
a probability that the UE can continue to camp on the serving cell within a predetermined time;
signal quality of the UE continuing to camp on the serving cell within a predetermined time;
a transmission rate of the UE continuing to camp on the serving cell within a predetermined time;
a transmission delay of the UE continuing to camp on the serving cell within a predetermined time; or
a recommendation probability that the UE continues to camp on the serving cell.

In an embodiment, the signal quality of the UE continuing to camp on the serving cell within a predetermined time includes at least one of:
an average value, peak value or minimum value of reference signal received power (RSRP) of the UE continuing to camp on the serving cell within a predetermined time;
an average value, peak value or minimum value of reference signal received quality (RSRQ) of the UE continuing to camp on the serving cell within a predetermined time; or
an average value, peak value or minimum value of a signal to interference plus noise ratio (SINR) of the UE continuing to camp on the serving cell within a predetermined time.

In an embodiment, the transmission rate of the UE continuing to camp on the serving cell within a predetermined time includes:
an average value, peak value or minimum value of the transmission rate of the UE continuing to camp on the serving cell within a predetermined time.

In an embodiment, the transmission delay of the UE continuing to camp on the serving cell within a predetermined time includes:
an average value, peak value or minimum value of the transmission delay of the UE continuing to camp on the serving cell within a predetermined time.

Here, the recommendation probability that the UE continues to camp on the serving cell may be obtained by considering various prediction parameters of the UE camping on the serving cell.

Exemplarily, the prediction parameter of the UE accessing a neighboring cell includes but is not limited to at least one of:
an occurrence probability of handover failure of the UE accessing a neighboring cell;
an occurrence probability of a ping-pong effect of the UE accessing a neighboring cell;
an occurrence probability of a communication interruption or call drop of the UE accessing a neighboring cell within a predetermined time;
an occurrence probability of QoS or QoE not satisfying a required parameter of the UE accessing a neighboring cell within a predetermined time;
a probability that the UE can continue to camp on a neighboring cell in a predetermined duration or a camping duration that the UE can continue to camp on a neighboring cell, in response to accessing the neighboring cell within a predetermined time;
signal quality of the UE camping on a neighboring cell in response to accessing the neighboring cell within a predetermined time;
a transmission rate of the UE camping on a neighboring cell in response to accessing the neighboring cell within a predetermined time;
a transmission delay of the UE camping on a neighboring cell in response to accessing the neighboring cell within a predetermined time; or
a recommendation probability that the UE accesses a neighboring cell.

Here, the ping-pong effect of the UE accessing a neighboring cell includes: a ping-pong effect occurring between the UE and other neighboring cells after accessing the neighboring cell, or a ping-pong effect occurring between the UE and the serving cell after accessing the neighboring cell.

Here, the recommendation probability that the UE accesses a neighboring cell may be obtained by considering various prediction parameters of the UE accessing a neighboring cell.

In an embodiment, the signal quality of the UE camping on a neighboring cell in response to accessing the neighboring cell within a predetermined time includes one of:
an average value, peak value or minimum value of RSRP of the UE camping on a neighboring cell in response to accessing the neighboring cell within a predetermined time;
an average value, peak value or minimum value of RSRQ of the UE camping on a neighboring cell in response to accessing the neighboring cell within a predetermined time; or
an average value, peak value or minimum value of a SINR of the UE camping on a neighboring cell in response to accessing the neighboring cell within a predetermined time.

In an embodiment, the transmission rate of the UE camping on a neighboring cell in response to accessing the neighboring cell within a predetermined time includes:
an average value, peak value or minimum value of the transmission rate of the UE camping on a neighboring cell in response to accessing the neighboring cell within a predetermined time.

In an embodiment, the transmission delay of the UE camping on a neighboring cell in response to accessing the neighboring cell within a predetermined time includes:
an average value, peak value or minimum value of the transmission delay of the UE camping on a neighboring cell in response to accessing the neighboring cell within a predetermined time.

The predetermined time here may be configured by the network, or stipulated by a communication protocol, or determined by the UE. Here, the predetermined time is configured by the network, which may mean that the UE receives configuration information transmitted by the network device, in which the configuration information carries the predetermined time.

In this way, in the embodiments of the present disclosure, a more comprehensive AI prediction result can be obtained through the AI model, so that based on the AI prediction, it can be accurately determined whether the AI prediction result satisfies the trigger event of the network configuration.

In an embodiment, the configuration information of the network configuration includes but is not limited to at least one of:
a trigger event; in which the trigger event includes a trigger event for reporting or a trigger event for conditional handover (CHO);
a threshold value of the trigger event;
a hysteresis value of a threshold in the trigger event;
a trigger time or a number of triggers;
an entering condition for the trigger event; or
a leaving condition for the trigger event.

In an embodiment, the entering condition for the trigger event may be: an AI prediction result of the serving cell is less than a threshold, and/or an AI prediction result of the neighboring cell is greater than or equal to the threshold.

In an embodiment, the leaving condition for the trigger event may be: an AI prediction result of the serving cell is greater than or equal to the threshold, and/or an AI prediction result of the neighboring cell is less than the threshold.

Take prediction parameters of event M2 and RSRP as an example. The entering condition for the trigger event may be: predicting that a minimum RSRP of the UE camping on the serving cell within a predetermined time is less than a threshold; or predicting that a sum of a minimum RSRP and a hysteresis value of the UE camping on the serving cell within a predetermined time is less than a threshold. The leaving condition for the trigger event may be: predicting that a minimum RSRP of the UE camping on the serving cell within a predetermined time is greater than or equal to a threshold; or, predicting that a difference between a minimum RSRP and a hysteresis value of the UE camping on the serving cell within a predetermined time is greater than or equal to a threshold.

Take prediction parameters of event M4 and RSRP as an example. The entering condition for the trigger event may be: predicting that a minimum RSRP of the UE accessing a neighboring cell and camping on the neighboring cell within a predetermined time is greater than or equal to a threshold; or, predicting that a difference between a minimum RSRP and a hysteresis value of the UE accessing a neighboring cell and camping on the neighboring cell within a predetermined time is greater than or equal to the threshold. The leaving condition for the trigger event may be: predicting that a minimum RSRP of the UE accessing a neighboring cell and camping on the neighboring cell within a predetermined time is less than a threshold; or, predicting that a sum of a minimum RSRP and a hysteresis value of the UE accessing a neighboring cell and camping on the neighboring cell within a predetermined time is less than a threshold.

Take prediction parameters of event M5 and RSRP as an example. The entering condition for the trigger event may be: predicting that a minimum RSRP of the UE camping on the serving cell within a predetermined time is less than a threshold 1, and predicting that a minimum RSRP of the UE accessing a neighboring cell and camping on the neighboring cell within a predetermined time is greater than or equal to a threshold 2 ; or, predicting that a sum of a minimum RSRP and a hysteresis value of the UE camping on the serving cell within a predetermined time is less than the threshold 1, and predicting that a difference between a minimum RSRP and a hysteresis value of the UE accessing a neighboring cell and camping on the neighboring cell within a predetermined time is greater than or equal to the threshold 2. The entering condition for the trigger event may be: predicting that a minimum RSRP of the UE camping on the serving cell within a predetermined time is greater than or equal to the threshold 1, and predicting that a minimum RSRP of the UE accessing a neighboring cell and camping on the neighboring cell within a predetermined time is less than the threshold 1 ; or, predicting that a difference between a minimum RSRP and a hysteresis value of the UE camping on the serving cell within a predetermined time is greater than or equal to the threshold 2, and predicting that a sum of a minimum RSRP and a hysteresis value of the UE accessing a neighboring cell and camping on the neighboring cell within a predetermined time is less than a threshold 3.

In an embodiment, the AI prediction result satisfying the network configuration includes: the AI prediction result satisfies the trigger event of the network configuration.

Embodiments of the present disclosure provide a method for communication processing. The method is performed by a UE, and includes: triggering the UE to perform an operation corresponding to the network configuration in response to the AI prediction result satisfying the trigger event of the network configuration.

In an embodiment, the AI prediction result satisfies the trigger event of the network configuration, which may be: a prediction result of at least one prediction parameter satisfies the trigger event. The prediction parameters here satisfying the trigger event includes: a prediction result of a prediction parameter of the serving cell is smaller than a threshold of the trigger event, and/or a prediction result of a prediction parameter of the neighboring cell is better than the prediction result of the prediction parameter of the serving cell.

Exemplarily, when the UE predicts that the AI prediction result of the reference signal received power (RSRP) of the serving cell is 5 decibel-milliwatts (dbm), and the trigger event is that a threshold of the UE continuing to camp on the serving cell is 3dbm; therefore the AI prediction result of the RSRP of the serving cell is less than the threshold of the trigger event, it is determined that the AI prediction result satisfies the trigger event of the network configuration.

In an embodiment, performing by the UE the operation corresponding to the trigger event includes: the UE performs a mobility management operation. The mobility management operation here at least includes: reporting the AI prediction result and/or a RMM measurement result, or performing a CHO procedure.

In an embodiment, the AI prediction result includes at least one of:
at least part of an AI prediction result of all available cells;
at least part of an AI prediction result of a corresponding cell satisfying the trigger event;
at least part of an AI prediction result of a cell configured by a network;
at least part of a best AI prediction result among AI prediction results in cells configured by the network; or
at least part of an AI prediction result of a prediction parameter of a service type of the UE in prediction parameters; or
at least part of an AI prediction result obtained by the UE based on an AI model.

Here, at least part of the AI prediction result may refer to: part or all of the AI prediction result, or part of the AI prediction result. Exemplarily, when available cells include cell 1, cell 2, and cell 3; prediction parameters include RSRP, RSRQ, and SINR. Then all of the AI prediction result may be: average values, peak values and minimum values of RSRP, RSRQ and SINR of cell 1, cell 2 and cell 3 within a predetermined time. Therefore, part of the AI prediction result may be: the average value, peak value and minimum value of RSRP of cell 1, or part of the AI prediction result may be: the average values of RSRQs of cell 1 and cell 2 within a predetermined time, etc.

Here, the AI prediction result of a corresponding cell satisfying the trigger event may be: a prediction result of a prediction parameter of a cell satisfies the trigger event. For example, the UE obtains prediction results of prediction parameters of a serving cell 1, a neighboring cell 2, and a neighboring cell 3; the prediction result of the prediction parameter of the serving cell 1 is less than a threshold value of the trigger event; the prediction result of the prediction parameter of the neighboring cell 1 is greater than the threshold value of the trigger event, and the prediction result of the prediction parameter of the neighboring cell 2 is less than the threshold value of the trigger event; then it is determined that the serving cell 1 and the neighboring cell 1 satisfy the trigger event, and the neighboring cell 2 does not satisfy the trigger event. Therefore, it is determined that the AI prediction result of the cell corresponding to the trigger event may be the AI prediction result of the prediction parameters of the serving cell 1 and the neighbor cell 1.

Here, the AI prediction result of the cell configured by the network may refer to the AI prediction result of a specified cell configured by the network. For example, the UE receives the configuration information sent by the network device, in which the configuration information carries a requirement of prediction results of cell 1 and cell 2; the AI prediction result of the cell configured by the network may be the AI prediction result of at least one prediction parameter of the cell 1 and/or cell 2.

Here, the best AI prediction result among the AI prediction results in cells configure by the network may be: for example, the network configures a cell 1 and a cell 2, and compares the prediction results of the prediction parameters of the cell 1 and cell 2; when the prediction result of multiple prediction parameters of the cell 1 is better than the prediction result of multiple prediction parameters of cell 2; the best AI prediction result among the AI prediction results in the cells configured by the network is the AI prediction result of cell 1.

In an embodiment, the trigger event includes but is not limited to one of:
a trigger event for a comparison of the AI prediction result to at least one threshold; or
a trigger event for a comparison of different AI prediction results.

Exemplarily, the trigger event for a comparison of the AI prediction result to at least one threshold includes but is not limited to at least one of:
event M1, indicating that the AI prediction result of the serving cell is greater than a threshold;
event M2, indicating that the AI prediction result of the serving cell is less than a threshold;
event M4, indicating that the AI prediction result of the neighboring cell is greater than a threshold;
event M7, indicating that the AI prediction result of the service type of the UE is greater than a threshold;
event M5, indicating that the AI prediction result of the serving cell is greater than a threshold 1, and the AI prediction result of the neighboring cell is smaller than a threshold 2.

Exemplarily, the trigger event for a comparison of different AI prediction results includes at least one of:
event M3, indicating that the AI prediction result of the neighboring cell is better than the AI prediction result of the serving cell;
event M6, indicating that the AI prediction result of the neighboring cell is better than the AI prediction result of a secondary cell.

The serving cell here includes: a primary cell (PCell), a secondary cell (SCell) and/or a primary secondary cell (PSCell). The PCell and PSCell here may also be referred to as a special cell (sPCell).

In an embodiment, triggering the UE to perform an operation corresponding to the trigger event, includes but is not limited to one of: triggering the UE to report first information required by a network; or triggering the UE to perform a CHO procedure.

In the embodiments of the present disclosure, the UE is triggered to perform the operation corresponding to the trigger event in response to the AI prediction result satisfying the trigger event of the network configuration. In the embodiments of the present disclosure, the AI prediction result can be obtained on the UE side, and the AI prediction result, the AI model and data for obtaining the AI prediction result, etc. can be maintained locally in the UE, without uploading the data for obtaining the AI prediction result or AI prediction result to the network. Thereby, the risk of data leakage can be reduced, data security can be improved, and wireless communication load can also be reduced.

Furthermore, since in the embodiments of the present disclosure, the AI prediction result are obtained on the UE side, it means that the UE can use the data on own side to train the AI model to obtain the AI prediction result, so that the AI prediction result is closer to the actual situation of the UE, thereby improving the prediction accuracy of the AI prediction model. Further, the embodiments of the present disclosure can customize the AI model for each UE, thereby providing better user experience.

It should be noted that those skilled in the art can understand that the methods provided in the embodiments of the present disclosure may be executed independently, or together with some methods in the embodiments of the present disclosure or some methods in related technologies.

In an embodiment, step S21 includes one of:
triggering the UE to report first information required by a network in response to determining that the AI prediction result satisfies the trigger event for reporting of the network configuration; or;
triggering the UE to perform a CHO procedure in response to determining that the AI prediction result satisfies the trigger event for the CHO of the network configuration.

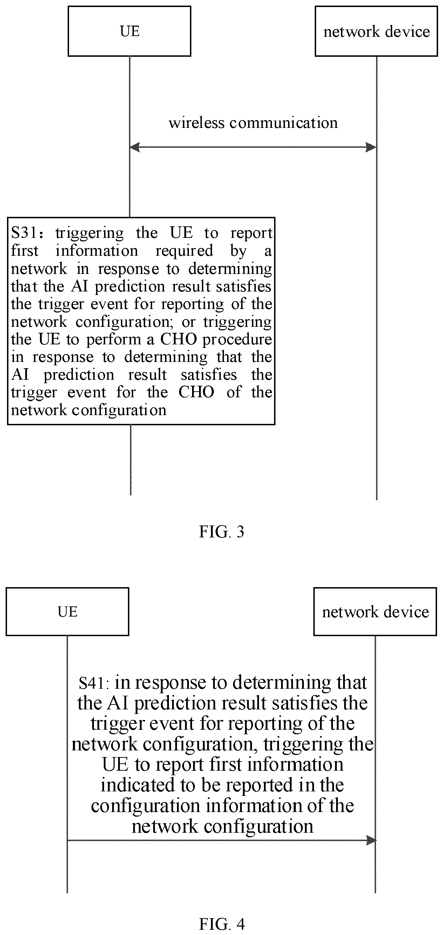

As shown in FIG. 3, an embodiment of the present disclosure provides a method for communication processing. The method is performed by a UE, and includes:
Step S31: triggering the UE to report first information required by a network in response to determining that the AI prediction result satisfies the trigger event for reporting of the network configuration; or triggering the UE to perform a CHO procedure in response to determining that the AI prediction result satisfies the trigger event for the CHO of the network configuration.

In some embodiments of the embodiments of the present disclosure, an AI prediction result is the AI prediction result of step S21; a trigger event may be the trigger event of any of the above embodiments.

In an embodiment, the trigger event includes: a trigger event for reporting and/or a trigger event for a CHO. Both the trigger event for reporting and the trigger event for a CHO may be trigger events in the related embodiments of step S21.

Here, the trigger event for reporting and the trigger event for a CHO may be carried in the configuration information based on different messages or signaling; and the structures of the messages or signaling carrying the trigger event for reporting and the trigger event for a CHO are also different. In this way, the UE can determine whether the trigger event is a trigger event for reporting or a trigger event for a CHO according to the content or structural form of the message or signaling.

Here, the UE may determine, based on the indication information configured by the network, whether the operation corresponding to the trigger event performed by the UE is to perform a report operation or to perform a CHO operation. For example, the UE receives configuration information sent by the network device, in which the configuration information includes: indication information configured to indicate that the trigger event is a trigger event for reporting or a trigger event for a CHO. Here, the indications take different values. For example, when the indication information is a first value, the indicated trigger event is the trigger event for reporting; when the indication information is a second value, the indicated trigger event is a trigger event for a CHO.

In an embodiment, the first information includes, but is not limited to: the AI prediction result, and/or a result of RRM measurement.

Exemplarily, the result of RRM measurement includes at least one of:
RSRP of a synchronization signal block (SSB) of the serving cell or neighboring cell;
RSRQ of a SSB of the serving cell or neighboring cell;
SINR of a SSB of the serving cell or neighboring cell;
RSRP of a channel state signal reference signal (CSI-RS) of the serving cell or neighboring cell;
RSRQ of a CSI-RS of the serving cell or neighboring cell; or
SINR of a CSI-RS of the serving cell or neighboring cell.

In an embodiment, the CHO procedure may be performing cell handover. Exemplarily, when the UE determines that the AI prediction result satisfies the trigger event for a CHO configured by the network, the UE performs cell handover.

In the embodiments of the present disclosure, the UE can trigger the UE to report the required first information based on the AI prediction result satisfying the trigger event configured by the network, or the UE can trigger the UE to perform the CHO procedure based on the AI prediction result satisfying the trigger event for the CHO configured by the network. In this way, the embodiments of the present disclosure can apply the AI prediction result to mobility management, and perform the mobility management operation on the UE side based on the AI prediction result. Therefore, comparing to obtaining the AI prediction result of the UE on the network side to perform mobility management operation, there is no need to transmit the AI prediction result and the data for obtaining the AI prediction result to the UE, thereby improving data security and reducing wireless communication load.

In an embodiment, triggering the UE to report the first information required by the network, includes one of:
triggering the UE to report the first information required by the network once; or
triggering The UE to periodically report the first information required by the network.

Embodiments of the present disclosure provide a method for communication processing. The method is performed by the UE, and includes: in response to determining that the AI prediction result satisfies the trigger event for reporting of the network configuration, triggering the UE to report the first information required by the network once.

Exemplarily, when the UE determines that the AI prediction result satisfies the trigger event for reporting of the network configuration, and determines the report as one-time reporting based on the configuration information of the network configuration, the UE is triggered to report the first information required by the network once.

Embodiments of the present disclosure provide a method for communication processing. The method is performed by a UE, and includes: in response to determining that the AI prediction result satisfies the trigger event for reporting of the network configuration, triggering the UE to periodically report the first information required by the network.

Exemplarily, when the UE determines that the AI prediction result satisfies the trigger event for reporting of the network configuration, and determines the report as periodic reporting based on the configuration information of the network configuration, the UE is triggered to periodically report the first information required by the network.

Here, the UE may determine a trigger report type based on the configuration information of the network configuration. The trigger report type includes: an event-triggered one-time report type or an event-triggered periodic report type.

In an embodiment, the configuration information of the network configuration includes:
a number of reports, indicating that the number of reports is N, and N is an integer greater than 0;
an interval indication, indicating an interval time for reporting.

Exemplarily, the configuration information of the network configuration includes: the number of reports indicating that the number of reports is 1. Then the UE determines to trigger reporting of the first information once; and it determines that the interval indication is invalid regardless of the received interval indication.

Exemplarily, the configuration information of the network configuration includes: the number of reports indicating that the number of reports is n, where n is an integer greater than 1; the interval indication indicating that a reporting interval is a first duration. Then, the UE is triggered to report the first information once every first time period, and to end the process until the accumulative reporting of n times.

In embodiments of the present disclosure, based on the number of reports and/or interval indication of the network configuration, the UE can be triggered to report the first information required by the network. For example, when the first information required by the network is reported once, signaling overhead can be saved; when the first information required by the network is reported multiple times, the network can obtain more complete and correct first information. In this way, it is beneficial to subsequently configure a suitable handover command for the UE and the like.

It should be noted that those skilled in the art can understand that the methods provided in the embodiments of the present disclosure may be executed independently, or together with some methods in the embodiments of the present disclosure or some methods in related technologies.

In an embodiment, triggering the UE to report the first information required by the network includes: triggering the UE to report first information indicated to be reported in the configuration information of the network configuration.

As shown in FIG. 4, an embodiment of the present disclosure provides a method for communication processing. The method is performed by the UE, and includes:
Step S41: in response to determining that the AI prediction result satisfies the trigger event for reporting of the network configuration, triggering the UE to report first information indicated to be reported in the configuration information of the network configuration.

In an embodiment, the first information indicated to be reported in the configuration information of the network configuration may refer to an AI prediction result that satisfies a trigger event. Of course, in other embodiments, the first information indicated to be reported in the configuration information of the network configuration may be any first information in step S31.

In some embodiments of the present disclosure, an AI prediction result is the AI prediction result of step S21; a trigger event may be the trigger event of the related embodiment in step S21; configuration information may be the configuration information of the related embodiment in step S21 and step S31. For example, the configuration information includes but is not limited to at least one of: a trigger event, a threshold value of trigger event, a hysteresis value of a threshold in trigger event, a trigger time, a number of triggers, an entering condition for the trigger event, a leaving condition for the trigger event, a number of reports or an interval instructions.

In an embodiment, triggering the UE to report the first information required by the network in response to determining that the AI prediction result satisfies the trigger event for reporting of the network configuration includes one of:
in response to an AI prediction result of a prediction object satisfying an entering condition for the trigger event within the trigger time or the number of triggers, the corresponding AI prediction result of the prediction object satisfying the entering condition is reported.

Embodiments of the present disclosure provide a method for communication processing. The method is performed by the UE, and includes: in response to an AI prediction result of a prediction object satisfying an entering condition for the trigger event within the trigger time or the number of triggers, reporting the corresponding AI prediction result of the prediction object satisfying the entering condition.

Exemplarily, within the trigger time, the UE performs m times of measurement based on the AI model, where m is an integer greater than 0. In the m times of Al measurement, prediction parameters of the AI prediction result of a cell A all satisfy the entering condition for the trigger event for reporting, the AI prediction result of the cell A is reported. One way of reporting the AI prediction result of cell A is: the UE stores a prediction object corresponding to the cell A in a report entry table on the UE side, and/or adds an identity of the cell A to a report cell list corresponding to the report entry, when the UE triggers the report, it will report the AI prediction result corresponding to the cell in the cell list.

When the UE side also needs to store the report entry corresponding to the prediction object that satisfies the trigger event for reporting, it can be the following:
exemplarily, within the trigger time, the UE performs m times of measurement based on the AI model, where m is an integer greater than 0. In the m times of Al measurement, the prediction parameters of the AI prediction result of the cell A all satisfy the entering condition for the trigger event for reporting, the AI prediction result of the cell A is reported. One way of reporting the AI prediction result of cell A is: the UE stores a prediction object corresponding to the cell A in a report entry table on the UE side, and/or adds an identity of the cell A to a report cell list corresponding to the report entry, when the UE triggers the report, it will report the AI prediction result corresponding to the cell in the cell list.

In the above example, during the m times of AI measurement, when an average value, a maximum value or a minimum value of the prediction parameters in the prediction result of the cell A satisfy the entering condition for the trigger event for reporting, the UE may also report the AI prediction result of the cell A.

Embodiments of the present disclosure provide a method for communication processing. The method is performed by the UE, and includes: in response to an AI prediction result of a prediction object satisfying a leaving condition for the trigger event within the trigger time or the number of triggers, reporting the corresponding AI prediction result of the prediction object not satisfying the leaving condition.

Exemplarily, within the trigger time, the UE performs m times of measurement based on the AI model, where m is an integer greater than 0. In the m times of AI measurement, prediction parameters of the AI prediction result of a cell B all satisfy the leaving condition for the trigger event for reporting, the AI prediction result of the cell B is not reported. One way of not reporting the AI prediction result of cell B is: deleting an identity of the cell B in a report cell list, or not adding the identity of the cell B to the cell list when the cell B is not in the report cell list, so when the UE reports the AI prediction result corresponding to the cell list, the AI prediction result of the cell B is not reported.

Exemplarily, when the prediction parameter corresponding to the report entry satisfies the leaving condition for the trigger event for reporting, the UE deletes the report entry from the report cell list. When the report cell list stored by the UE is empty, the UE deletes the report cell.

In the above example, when an average value, maximum value or minimum value of the prediction parameters in the AI prediction result of the cell B satisfies the leaving condition for the trigger event for reporting during m times of AI measurement, the UE may also not report the AI prediction result of the cell A.

Exemplarily, when there is no cell identifier in the report cell list, it is determined that there is no AI prediction result of the corresponding cell to be reported, and the process of triggering to report the first information is stopped.

Exemplarily, when the UE does not store the report entry corresponding to a certain measurement object, it stops reporting the AI prediction result of the measurement object.

In the embodiments of the present disclosure, when the UE determines that the AI prediction result satisfies the trigger event for reporting of the network configuration, the UE is triggered to report the first information indicated in the configuration information of the network configuration. In this way, the UE can report the AI prediction result required by the network, and there is no need to report the AI prediction result that is not needed by the network, which saves the waste of reporting resources and improves the effectiveness of the AI prediction result.

Moreover, in the embodiments of the present disclosure, according to whether the AI prediction result of the cell satisfies the entering condition or leaving condition for the trigger event for reporting, the UE reports the AI prediction result of the cell that satisfies the entering condition of the trigger event for reporting. In this way, the network can obtain a more accurate AI prediction result, which is beneficial for the network to configure a handover command for the UE based on the AI prediction result.

In the embodiments of the present disclosure, after the cell satisfies the trigger event, the AI prediction result corresponding to the cell that satisfies the entering condition for the trigger event is reported; but in other embodiments, it may also be that the AI prediction result described in step S21 is reported after the cell satisfies the trigger event.

In an embodiment, the configuration information further includes: a candidate cell identifier of a CHO. The candidate cell here is a candidate target cell configured by the network for the UE and available for handover. When the UE evaluates that the trigger event for a CHO corresponding to the candidate cell is satisfied, the UE may initiate random access and handover to the candidate cell.

Certainly, in other embodiments, the candidate cell may also be any other cell.

In an embodiment, triggering the UE to perform the CHO procedure in response to determining that the AI prediction result satisfies the trigger event for the CHO of the network configuration, includes:
in response to an AI prediction result of the candidate cell satisfying the entering condition for the trigger event within the trigger time or the number of triggers, triggering the UE to perform the CHO procedure based on the candidate cell.

Embodiments of the present disclosure provide a method for communication processing. The method is performed by a UE, and includes: in response to an AI prediction result of the candidate cell satisfying the entering condition for the trigger event within the trigger time or the number of triggers, triggering the UE to perform the CHO procedure based on the candidate cell.

Exemplarily, within the trigger time, the UE performs m times of measurement based on the AI model, where m is an integer greater than 0. In the m times of AI measurement, the prediction parameters of the AI prediction result of the candidate cell A all satisfy the entering condition for the corresponding trigger event for the CHO, then the UE performs the process of handover to the candidate cell in the configuration information.

In the above example, during the m times of AI measurement, when an average value, maximum value or minimum value of the prediction parameters in the prediction result of the cell A AI satisfy the entering condition for the trigger event for a CHO, the UE may also perform the process of handover to the candidate cell in the configuration information.

Embodiments of the present disclosure provide a method for communication processing. The method is performed by the UE, and includes: in response to an AI prediction result of a prediction object satisfying a leaving condition for the trigger event within the trigger time or the number of triggers, not performing the CHO procedure.

Exemplarily, within the trigger time, the UE performs m times of measurement based on the AI model, where m is an integer greater than 0. In the m times of AI measurement, the prediction parameters of the AI prediction result of the candidate cell B all satisfy the leaving condition for the trigger event for a CHO corresponding to the candidate cell, then the UE does not perform the CHO procedure.

In the above example, during the m times of AI measurement, when an average value, maximum value or minimum value of the prediction parameters in the AI prediction result of the cell B satisfy the leaving condition for the trigger event for a CHO, the UE does not perform the CHO procedure.

In the embodiments of the present disclosure, according to whether the AI prediction result of the cell satisfies the entering condition or leaving condition for the trigger event for a CHO, the UE can perform the CHO procedure based on the cell that satisfies the entering condition for the trigger event for the CHO. In this way, the UE can be handed over to a suitable cell, improving the quality of wireless communication and the like.

It should be noted that those skilled in the art can understand that the methods provided in the embodiments of the present disclosure may be executed independently, or together with some methods in the embodiments of the present disclosure or some methods in related technologies.

The following is provided a method for communication processing, which is performed by a network device, and similar to the above description of the method for communication processing performed by the UE; and, for the technical details not disclosed in the embodiments of the method for communication processing performed by the network device, please reference to the description of examples of the method for communication processing performed by the UE, and no detailed description is given here.

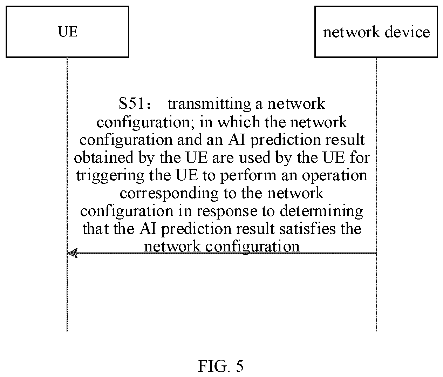

As shown in Figure 5, a method for communication processing is provided. The method is performed by a network device, and includes:
step S51: transmitting a network configuration; in which the network configuration and an AI prediction result obtained by the UE are used by the UE for triggering the UE to perform an operation corresponding to the network configuration in response to determining that the AI prediction result satisfies the network configuration.

In an embodiment, the configuration information includes one or more of the following information:
a trigger event; in which the trigger event includes a trigger event for reporting or a trigger event for conditional handover (CHO);
a threshold value of the trigger event;
a hysteresis value of a threshold in the trigger event;
a trigger time or a number of triggers;
an entering condition for the trigger event;
a leaving condition for the trigger event; or
a candidate cell identifier of the CHO.

Embodiments of the present disclosure provide a method for communication processing. The method is performed by a network device, and includes: transmitting configuration information of the network configuration; in which the configuration information includes: a trigger event, in which the trigger event and the AI prediction result obtained by the UE are used by the UE for triggering the UE to perform an operation corresponding to the trigger event in response to determining that the AI prediction result satisfies the trigger event.

In an embodiment, the configuration information includes:
a number of reports, indicating that the number of reports is N, where the N is an integer greater than 0;
an interval indication, indicating an interval time for reporting.
In an embodiment, the trigger event includes but is not limited to one of:
a trigger event for a comparison of the AI prediction result to at least one threshold; or
a trigger event for a comparison of different AI prediction results.

Exemplarily, the trigger event for comparing the AI prediction result with at least one threshold includes but is not limited to at least one of
event M1, indicating that the AI prediction result of the serving cell is greater than a threshold;
event M2, indicating that the AI prediction result of the serving cell is less than a threshold;
event M4, indicating that the AI prediction result of the neighboring cell is greater than a threshold;
event M7, indicating that the AI prediction result of the service type of the UE is greater than a threshold;
event M5, indicating that the AI prediction result of the serving cell is greater than a threshold 1, and the AI prediction result of the neighboring cell is smaller than a threshold 2.

Exemplarily, the trigger event for a comparison of different AI prediction results includes at least one of:
event M3, indicating that the AI prediction result of the neighboring cell is better than the AI prediction result of the serving cell;
event M6, indicating that the AI prediction result of the neighboring cell is better than the AI prediction result of a secondary cell.

In an embodiment, the configuration information includes: indication information configured to indicate that the trigger event is a trigger event for reporting or a trigger event for a CHO. Here, the indications take different values. For example, when the indication information is a first value, the indicated trigger event is the trigger event for reporting; when the indication information is a second value, the indicated trigger event is a trigger event for a CHO.

In an embodiment, the configuration information includes: trigger report type information; the trigger report type information includes: an event type or a periodicity type. The event type here may include: one-time reporting type or periodic reporting type.

In an embodiment, the first information includes:
the AI prediction result, and/or a result of RRM measurement.

In an embodiment, the AI prediction result includes: a prediction result for at least one prediction object and a prediction parameter.

In an embodiment, the AI prediction result includes: a prediction result of the RRM prediction parameter of the UE. The AI prediction result here does not have a specific prediction object; the AI prediction result here is a prediction for the characteristics of the UE itself.

In an embodiment, the prediction object includes but is not limited to: a cell identity or a frequency point.

In an embodiment, the prediction parameter includes but is not limited to at least one of:
a prediction parameter of the RRM of the UE;
a prediction parameter of the UE continuing to camp on the serving cell;
a prediction parameter of the UE accessing a neighboring cell.

In an embodiment, the prediction parameter of the RRM of the UE includes but is not limited to at least one of:
an occurrence probability of a first traffic service of the UE within a predetermined time; in which traffic of the first traffic service is greater than a traffic threshold;
an occurrence probability of a first delay service of the UE within a predetermined time; in which a delay of the first delayed service is less than a delay threshold;
a trajectory and direction of movement of the UE within a predetermined time;
a required parameter of quality of service (QoS) of the UE within a predetermined time; or
a required parameter of quality of experience (QoE) of the UE within a predetermined time.

In an embodiment, the prediction parameter of the UE camping on a serving cell includes but is not limited to at least one of:
an occurrence probability of radio link failure of the UE within a predetermined period;
an occurrence probability of a communication interruption or call drop of the UE within a predetermined time;
an occurrence probability of QoS or QoE not satisfying a required parameter of the UE within a predetermined time;
a probability that the UE can continue to camp on the serving cell within a predetermined time;
signal quality of the UE continuing to camp on the serving cell within a predetermined time;
a transmission rate of the UE continuing to camp on the serving cell within a predetermined time;
a transmission delay of the UE continuing to camp on the serving cell within a predetermined time; or
a recommendation probability that the UE continues to camp on the serving cell.

In an embodiment, the signal quality of the UE continuing to camp on the serving cell within a predetermined time includes at least one of:
an average value, peak value or minimum value of RSRP of the UE continuing to camp on the serving cell within a predetermined time;
an average value, peak value or minimum value of RSRQ of the UE continuing to camp on the serving cell within a predetermined time; or
an average value, peak value or minimum value of a SINR of the UE continuing to camp on the serving cell within a predetermined time.

In an embodiment, the transmission rate of the UE continuing to camp on the serving cell within a predetermined time includes:
an average value, peak value or minimum value of the transmission rate of the UE continuing to camp on the serving cell within a predetermined time.

In an embodiment, the transmission delay of the UE continuing to camp on the serving cell within a predetermined time includes:
an average value, peak value or minimum value of the transmission delay of the UE continuing to camp on the serving cell within a predetermined time.

Here, the recommendation probability that the UE continues to camp on the serving cell may be obtained by considering various prediction parameters of the UE camping on the serving cell.

In an embodiment, the prediction parameter of the UE accessing a neighboring cell includes but is not limited to at least one of:
an occurrence probability of handover failure of the UE accessing a neighboring cell;
an occurrence probability of a ping-pong effect of the UE accessing a neighboring cell;
an occurrence probability of a communication interruption or call drop of the UE accessing a neighboring cell within a predetermined time;
an occurrence probability of QoS or QoE not satisfying a required parameter of the UE accessing a neighboring cell within a predetermined time;
a probability that the UE can continue to camp on a neighboring cell in a predetermined duration or a camping duration that the UE can continue to camp on a neighboring cell, in response to accessing the neighboring cell within a predetermined time;
signal quality of the UE camping on a neighboring cell in response to accessing the neighboring cell within a predetermined time;
a transmission rate of the UE camping on a neighboring cell in response to accessing the neighboring cell within a predetermined time;
a transmission delay of the UE camping on a neighboring cell in response to accessing the neighboring cell within a predetermined time; or
a recommendation probability that the UE accesses a neighboring cell.

Here, the ping-pong effect of the UE accessing a neighboring cell includes: a ping-pong effect occurring between the UE and other neighboring cells after accessing the neighboring cell, or a ping-pong effect occurring between the UE and the serving cell after accessing the neighboring cell.

Here, the recommendation probability that the UE accesses a neighboring cell may be obtained by considering various prediction parameters of the UE accessing a neighboring cell.

In an embodiment, the signal quality of the UE camping on a neighboring cell in response to accessing the neighboring cell within a predetermined time includes one of:
an average value, peak value or minimum value of RSRP of the UE camping on a neighboring cell in response to accessing the neighboring cell within a predetermined time;
an average value, peak value or minimum value of RSRQ of the UE camping on a neighboring cell in response to accessing the neighboring cell within a predetermined time; or
an average value, peak value or minimum value of a SINR of the UE camping on a neighboring cell in response to accessing the neighboring cell within a predetermined time.

In an embodiment, the transmission rate of the UE camping on a neighboring cell in response to accessing the neighboring cell within a predetermined time includes:
an average value, peak value or minimum value of the transmission rate of the UE camping on a neighboring cell in response to accessing the neighboring cell within a predetermined time.

In an embodiment, the transmission delay of the UE camping on a neighboring cell in response to accessing the neighboring cell within a predetermined time includes:
an average value, peak value or minimum value of the transmission delay of the UE camping on a neighboring cell in response to accessing the neighboring cell within a predetermined time.

In an embodiment, the result of RRM measurement includes at least one of:
RSRP of a SSB of the serving cell or neighboring cell;
RSRQ of a SSB of the serving cell or neighboring cell;
SINR of a SSB of the serving cell or neighboring cell;
RSRP of a CSI-RS of the serving cell or neighboring cell;
RSRQ of a CSI-RS of the serving cell or neighboring cell; or
SINR of a CSI-RS of the serving cell or neighboring cell

In an embodiment, the AI prediction result includes but is not limited to at least one of:
at least part of an AI prediction result of all available cells;
at least part of an AI prediction result of a corresponding cell satisfying the trigger event;
at least part of an AI prediction result of a cell configured by a network;
at least part of a best AI prediction result among AI prediction results in cells configured by the network; or
at least part of an AI prediction result of a prediction parameter of a service type of the UE in prediction parameters; or
at least part of an AI prediction result obtained by the UE based on an AI model.

Embodiments of the present disclosure provide a method for communication processing. The method is performed by the network device, and includes: receiving first information required by a network reported by the UE in response to determining that the AI prediction result satisfies the trigger event.

It should be noted that those skilled in the art can understand that the methods provided in the embodiments of the present disclosure may be executed independently, or together with some methods in the embodiments of the present disclosure or some methods in related technologies.

In order to further explain any embodiment of the present disclosure, a specific example is provided below:

### Example one

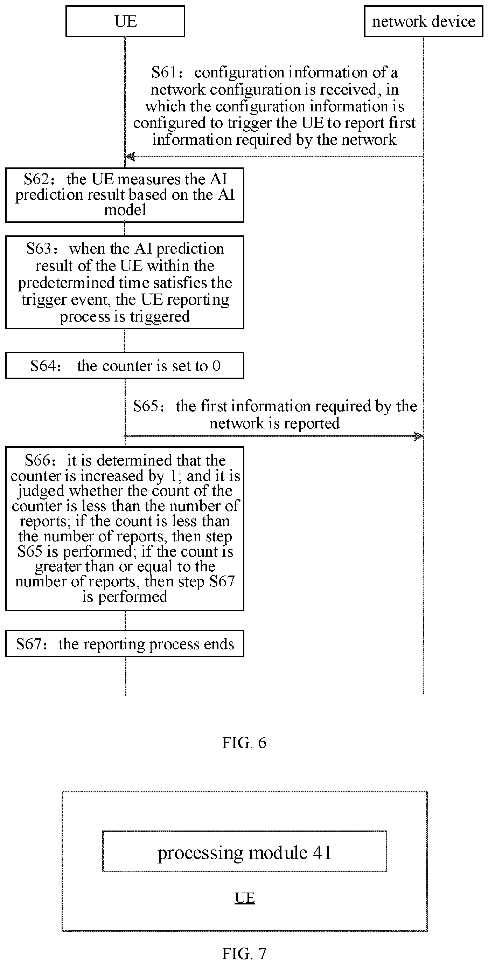

As shown in FIG. 6, an embodiment of the present disclosure provides a method for communication processing. The method is performed by the UE, and includes the following steps.

Step S61, configuration information of a network configuration is received, in which the configuration information is configured to trigger the UE to report first information required by the network.

In an optional embodiment, the UE receives configuration information of the network configuration, in which the configuration information includes:
trigger report type information, indicating an event type;
the trigger event is M5;
prediction parameters of the trigger event includes:
a threshold 1, a minimum RSRP of the UE continuing to camp on the serving cell is 5 decibel-milliwatts (dbm) within a predetermined time;
a threshold 2, a minimum RSRP of the UE accessing a neighboring cell is 6dbm within a predetermined time;
a hysteresis value is 0.5dbm;
a trigger time is 1 second (s);
an entering condition for the trigger event is: Mp+Hys<Thresh1, and Mn-Hys>Thresh2;
a leaving condition for the trigger event is: Mp-Hys>Thresh1, and Mn+Hys<Thresh2;
where Mp is the minimum RSRP predicted by the AI module for the UE continuing to camp on the serving cell within a predetermined time; Mn is the minimum RSRP predicted by the AI module for the UE accessing a neighboring cell within a predetermined time; Hys is the hysteresis value; Thresh1 is the threshold value 1; Thresh2 is the threshold value 2;
the number of reports is 4;
an interval indication indicating that the interval time for reporting is 2s.

Step S62: the UE measures the AI prediction result based on the AI model;

In an optional embodiment, the UE predicts an average value, peak value or minimum value of RSRP in the serving cell based on the AI model, and an average, peak value or minimum value of RSRP for accessing the neighboring cell.

In an optional embodiment, the neighboring cell is a cell that can be searched and a cell stored in historical information.

In an optional embodiment, the UE obtains the measurement period of the AI module is 20 milliseconds (ms); the UE performs periodic measurement based on the measurement period.

Step S63: when the AI prediction result of the UE within the predetermined time satisfies the trigger event, the UE reporting process is triggered;

In an optional embodiment, when the UE determines that the AI prediction result of a neighboring cell satisfies the entering condition for the trigger event and determines that the AI prediction result of the serving cell satisfies the leaving condition for the trigger event within a predetermined time, the UE reporting process is triggered.

Step S64: the counter is set to 0;

In an optional embodiment, the UE sets the counter to 0; the counter is a reporting counter.

Step S65: the first information required by the network is reported;
In an optional embodiment, the UE selects the latest AI prediction result, which includes: the average value, peak value and minimum value of the RSRP of the UE in the serving cell, and the average value, peak value and minimum value of the RSRP of the UE accessing the neighboring cell, in which the average value, peak value and minimum value of the RSRP of the UE in the serving cell are 3dbm, 3.5dbm and 2.5dbm respectively; the average value, peak value and minimum value of the RSRP of the UE accessing the neighboring cell are 8dbm, 9.5dbm and 7.5dbm respectively; and the UE reports the first information required by the network, which includes: within the predetermined time, the average value, peak value and minimum value of the RSRP of the UE in the serving cell are 3dbm, 3.5dbm and 2.5dbm respectively; and the average value, peak value and minimum value of the RSRP of the UE accessing the neighboring cell are 8dbm, 9.5dbm and 7.5dbm respectively.

Step S66: it is determined that the counter is increased by 1; and it is judged whether the count of the counter is less than the number of reports; if the count is less than the number of reports, then step S65 is performed; if the count is greater than or equal to the number of reports, then step S67 is performed;
In an optional embodiment, the UE judges whether the count of the counter is less than the number of reports; if the count is less than the number of reports, the step S85 is performed; if the count is greater than or equal to the number of reports, the step S87 is performed.

In an optional embodiment, the UE may also start a timer; the timer may be 2s; when the timer expires, step S83 is performed.

Step S67: the reporting process ends.

In an optional embodiment, when the UE determines that the count of the counter is greater than or equal to the number of reports, the reporting process ends.

In an optional embodiment, when the UE determines that the AI prediction result of the neighboring cell satisfies the leaving condition for the trigger event and determines that the AI prediction result of the serving cell satisfies the leaving condition for the trigger event within a predetermined time, the reporting process ends.

In the embodiments of the present disclosure, the AI prediction result can be obtained on the UE side, such that the AI prediction result, the AI model and data for obtaining the AI prediction result, etc., can be maintained locally in the UE, without uploading the data for obtaining the AI prediction result or AI prediction result to the network. Thereby, the risk of data leakage can be reduced, data security can be improved, and wireless communication load can also be reduced.

Furthermore, since in the embodiments of the present disclosure, the AI prediction result are obtained on the UE side, it means that the UE can use the data on own side to train the AI model to obtain the AI prediction result, so that the AI prediction result is closer to the actual situation of the UE, thereby improving the prediction accuracy of the AI prediction model.

Furthermore, in the embodiments of the present disclosure, the AI prediction result can be reported based on the configuration information of the network configuration, which, on the one hand, can enable the network to obtain the AI prediction result more effectively, and on the other hand, can save the resources used for reporting the AI prediction result that do not need to be reported.

Furthermore, in the embodiments of the present disclosure, the UE report is triggered only when the serving cell satisfies the entering condition for the trigger event and the AI prediction result of the neighboring cell satisfies the leaving condition for the trigger event; and the report process ends when the AI prediction results of the serving cell and the neighboring cell both satisfy the leaving condition for the trigger event. In this way, on the one hand, the network can configure a suitable neighboring cell for the UE to hand over, thereby improving the subsequent wireless communication quality of the UE; and on the other hand, the instability caused by constant cell handover of UE can be reduced, and the stability of UE wireless communication connection can be improved.

As shown in FIG. 7, an embodiment of the present disclosure provides an apparatus for communication processing. The apparatus is applied to the UE, and may include: a processing module 41, configured to trigger the UE to perform an operation corresponding to a network configuration in response to an AI prediction result satisfying the network configuration.

An embodiment of the present disclosure provides an apparatus for communication processing. The apparatus is applied to the UE, and includes: a processing module 41, configured to trigger the UE to perform an operation corresponding to a trigger event in response to the AI prediction result satisfying the trigger event of the network configuration.

An embodiment of the present disclosure provides an apparatus for communication processing. The apparatus is applied to the UE, and may include: a processing module 41, configured to trigger the UE to report first information required by a network in response to determining that the AI prediction result satisfies the trigger event for reporting of the network configuration; or a processing module 41, configured to trigger the UE to perform a CHO procedure in response to determining that the AI prediction result satisfies the trigger event for a CHO of the network configuration.

In an embodiment, the first information includes:
the AI prediction result and/or a result of radio resource management RRM measurement.

In an embodiment, the AI prediction result includes: a prediction result for at least one prediction object and a prediction parameter.

In an embodiment, the prediction object includes: a cell identity or a frequency point.

In an embodiment, the prediction parameter include at least one of:
a prediction parameter of RRM of the UE;
a prediction parameter of the UE continuing to camp on a serving cell; or
a prediction parameter of the UE accessing a neighboring cell.

In an embodiment, the AI prediction results include at least one of:
at least part of an AI prediction result of all available cells;
at least part of an AI prediction result of a corresponding cell satisfying the trigger event;
at least part of an AI prediction result of a cell configured by the network;
at least part of a best AI prediction result among AI prediction results in cells configured by the network;
at least part of an AI prediction result of a prediction parameter of a service type of the UE in prediction parameters; or
at least part of an AI prediction result obtained by the UE based on an AI model.

An embodiment of the present disclosure provides an apparatus for communication processing. The apparatus is applied to the UE, and may include: a processing module 41, configured to trigger the UE to report the first information required by the network once; or, a processing module 41, configured to trigger the UE to periodically report the first information required by the network.

In an embodiment, the trigger event includes one of:
a trigger event for a comparison of the AI prediction result to at least one threshold; or
a trigger event for a comparison of different AI prediction results.

In an embodiment, triggering the UE to report the first information required by the network includes:
triggering the UE to report the first information indicated to be reported in the configuration information of the network configuration.

In an embodiment, the configuration information of the network configuration includes:
a number of reports, indicating that the number of reports is N, where N is an integer greater than 0; and
an interval indication, indicating an interval time for reporting.

In an embodiment, the configuration information also includes one or more of the following information:
a trigger event, in which the trigger event includes a trigger event for reporting or a trigger event for CHO;
a threshold value of the trigger event;
a hysteresis value of a threshold in the trigger event;
a trigger time or a number of triggers;
an entering condition for the trigger event; or
a leaving condition for the trigger event.

An embodiment of the present disclosure provides an apparatus for communication processing. The apparatus is applied to the UE, and may include: a processing module, configured to report the corresponding AI prediction result of the prediction object satisfying the entering condition, in response to the AI prediction result of the prediction object satisfying the entering condition for the trigger event within the trigger time or the number of triggers.

In an embodiment, the configuration information further includes: a candidate cell identifier of the CHO.

An embodiment of the present disclosure provides an apparatus for communication processing. The apparatus is applied to the UE, and may include: a processing module, configured to trigger the UE to perform the CHO procedure based on the candidate cell, in response to an AI prediction result of the candidate cell satisfying the entering condition for the trigger event within the trigger time or the number of triggers.

It should be noted that those skilled in the art can understand that the apparatuses provided in the embodiments of the present disclosure may be implemented independently, or together with some apparatuses in the embodiments of the present disclosure or devices in related technologies.

Regarding the apparatuses in the foregoing embodiments, the specific manner in which each module executes operations has been described in detail in the embodiments related to the method, and will not be described in detail here.

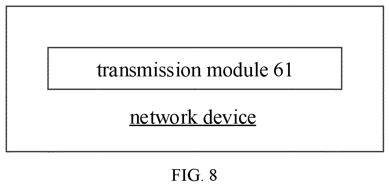

As shown in FIG. 8, an embodiment of the present disclosure provides an apparatus for communication processing. The apparatus is applied to a network device and may include:
a transmission module 61, configured to transmit configuration information of a network configuration;
in which the network configuration and an AI prediction result obtained by a UE are used by the UE for triggering the UE to perform an operation corresponding to the network configuration in response to determining that the AI prediction result satisfies the network configuration.

An embodiment of the present disclosure provides an apparatus for communication processing. The apparatus is applied to the network device, and may include: a transmission module 61, configured to transmit configuration information of a network configuration. The network configuration information includes at least a trigger event. The network configuration and the AI prediction result obtained by the UE are used by the UE for triggering the UE to perform an operation corresponding to the trigger event in response to determining that the AI prediction result satisfies the trigger event.

In an embodiment, the configuration information includes:
a number of reports, indicating that the number of reports is N, where N is an integer greater than 0;
an interval indication, indicating an interval time for reporting.

In an embodiment, the configuration information includes one or more of the following information:
a trigger event, in which the trigger event includes a trigger event for reporting or a trigger event for CHO;
a threshold value of the trigger event;
a hysteresis value of a threshold in the trigger event;
a trigger time or a number of triggers;
an entering condition for the trigger event;
a leaving condition for the trigger event; or
a candidate cell identity of the CHO.

An embodiment of the present disclosure provides an apparatus for communication processing. The apparatus is applied to a network device, and may include: a receiving module, configured to receive first information required by the network reported by the UE after determining that the AI prediction result satisfies a trigger event.

In an embodiment, the first information includes:
the AI prediction result, and/or, a result of RRM measurement.

In an embodiment, the prediction object includes: a cell identity or a frequency point.

In an embodiment, the prediction parameter include at least one of:
a prediction parameter of RRM of the UE;
a prediction parameter of the UE continuing to camp on a serving cell; or
a prediction parameter of the UE accessing a neighboring cell.

In an embodiment, the AI prediction results include at least one of:
at least part of an AI prediction result of all available cells;
at least part of an AI prediction result of a corresponding cell satisfying the trigger event;
at least part of an AI prediction result of a cell configured by the network;
at least part of a best AI prediction result among AI prediction results in cells configured by the network;
at least part of an AI prediction result of a prediction parameter of a service type of the UE in prediction parameters; or
at least part of an AI prediction result obtained by the UE based on an AI model

It should be noted that those skilled in the art can understand that the apparatuses provided in the embodiments of the present disclosure may be implemented independently, or together with some apparatuses in the embodiments of the present disclosure or apparatuses in related technologies.

Regarding the apparatus in the foregoing embodiments, the specific manner in which each module executes operations has been described in detail in the embodiments related to the method, and will not be described in detail here.

An embodiment of the present disclosure provides a device for communication, includes:
a processor;
a memory for storing instructions executable by the processor;
in which the processor is configured to implement the method for communication processing in any embodiment of the present disclosure when running the executable instruction.

In an embodiment, the device for communication may be a network device or a UE. The network device may be a base station or a core network device.

The processor may include various types of storage media, which are non-transitory computer storage media, and can continue to memorize and store information thereon after the user equipment is powered off.

The processor may be connected to the memory via a bus or the like, and used to read the executable program stored on the memory, for example, at least one of the methods shown in Figs. 2 to 6.

An embodiment of the present disclosure further provides a computer storage medium. A computer executable program is stored in the computer storage medium. When the executable program is executed by a processor, the method for communication processing of any embodiment of the present disclosure is implemented, for example, at least one of the methods shown in Figs. 2 to 6.

With regard to the device or storage medium in the above embodiments, the specific manner in which each module executes operations has been described in detail in the embodiments related to the method, and will not be described in detail here.

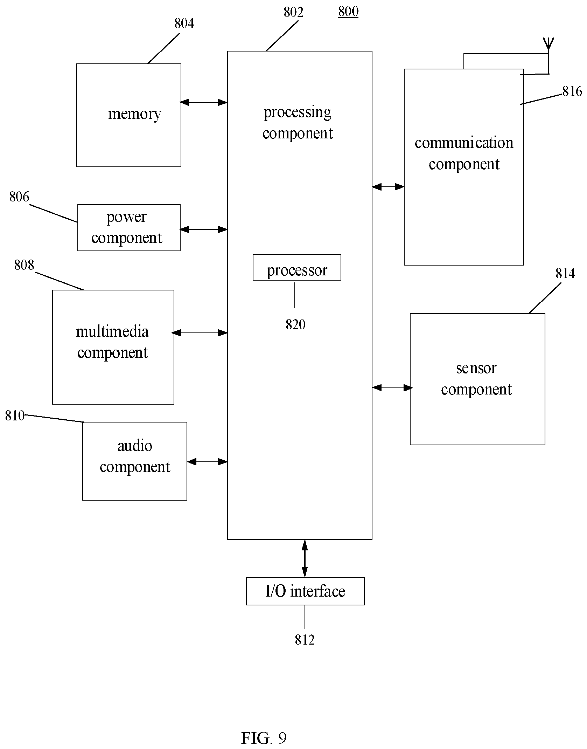

FIG. 9 is a block diagram of a user equipment 800 according to an exemplary embodiment of the present disclosure. For example, the user equipment 800 may be a mobile phone, computer, digital broadcast terminal, messaging device, game console, tablet device, medical device, fitness device, personal digital assistant, and the like.

Referring to FIG. 9, the user equipment 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, telephone calls, data communications, camera operations, and recording operations. The processing component 802 may include at least one processor 820 to execute instructions to perform all or part of the steps in the above described method. Moreover, the processing component 802 may include at least one module which facilitates the interaction between the processing component 802 and other components. For example, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, video, etc. The memory 804 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a programmable read-only memory (PROM), a Read-Only Memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a Liquid Crystal Display (LCD) and a Touch Panel (TP). In a case that the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the user equipment 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the user equipment 800. For instance, the sensor component 814 may detect an open/closed status of the user equipment 800, relative positioning of components, e.g., the display and the keypad of the user equipment 800, and the sensor component 814 may further detect a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the user equipment 800 and other devices. The user equipment 800 can access a wireless network based on a communication standard, such as WiFi, 2G or 3G, or a combination thereof. In an exemplary embodiment, the communication component 816 receives a broadcast signal or broadcast associated information from an external broadcast management system via a physical broadcast channel. In an embodiment, the communication component 816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In exemplary embodiments, the user equipment 800 may be implemented with at least one application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions that are executable by the processor 820 in the user equipment 800, for performing the above described methods. For example, the non-transitory computer-readable storage medium may be a ROM, a RAM, a CD-ROM, a magnetic tape, a floppy disc, an optical data storage device, and the like.

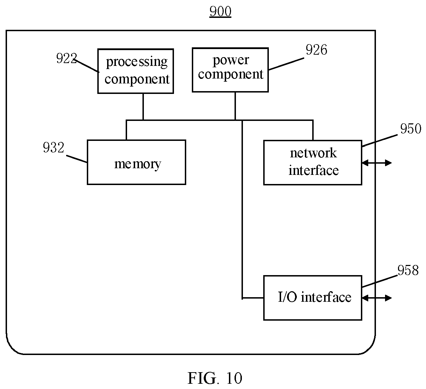

Fig. 10 shows a structure of a base station according to an embodiment. For example, the base station 900 may be provided as a network side device. Referring to FIG. 10, the base station 900 includes a processing component 922, which further includes one or more processors, and a memory resource represented by a memory 932 for storing instructions executable by the processing component 922, such as application programs. The application program stored in the memory 932 may include one or more modules each corresponding to a set of instructions. In addition, the processing component 922 is configured to execute instructions to perform the above method applied to the base station, for example, the method shown in Figs. 4 to 10.

The base station 900 may also include a power component 926 configured to perform power management of the base station 900 , a wired or wireless network interface 950 configured to connect the base station 900 to a network, and an input-output (I/O) interface 958. The base station 900 can operate based on an operating system stored in the memory 932, such as Windows Server^{™}, Mac OS X^{™}, Unix^{™}, Linux^{™}, FreeBSD^{™} or the like.

Other implementations of the present disclosure will be readily apparent to those skilled in the art from consideration of the specification and practice of the invention disclosed herein. The present disclosure is intended to cover any modification, use or adaptation of the present disclosure, these modifications, uses or adaptations follow the general principle of the invention and include common knowledge or conventional technical means in the technical field not disclosed in the present disclosure. The specification and embodiments are to be considered exemplary only, with a true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for communication processing, performed by a user equipment UE, comprising:
triggering the UE to perform an operation corresponding to a network configuration in response to an artificial intelligence AI prediction result satisfying the network configuration.

2. The method according to claim 1, wherein configuration information of the network configuration comprises one or more of:
a trigger event; wherein the trigger event comprises a trigger event for reporting or a trigger event for conditional handover CHO;
a threshold value of the trigger event;
a hysteresis value of a threshold in the trigger event;
a trigger time or a number of triggers;
an entering condition for the trigger event; or
a leaving condition for the trigger event.

3. The method according to claim 2, wherein triggering the UE to perform the operation corresponding to the network configuration in response to the artificial intelligence AI prediction result satisfying the network configuration, comprises:
triggering the UE to perform an operation corresponding to the trigger event in response to the AI prediction result satisfying the trigger event of the network configuration.

4. The method according to claim 3, wherein triggering the UE to perform the operation corresponding to the trigger event in response to the AI prediction result satisfying the trigger event of the network configuration, comprises:
triggering the UE to report first information required by a network in response to determining that the AI prediction result satisfies the trigger event for reporting of the network configuration; or
triggering the UE to perform a CHO procedure in response to determining that the AI prediction result satisfies the trigger event for the CHO of the network configuration.

5. The method according to claim 4, wherein the first information comprises:
the AI prediction result and/or a result of radio resource management RRM measurement.

6. The method according to any one of claims 1 to 4, wherein the AI prediction result comprises: a prediction result for at least one prediction object and a prediction parameter.

7. The method according to claim 6, wherein the prediction object comprises: a cell identity or a frequency point.

8. The method according to claim 6, wherein the prediction parameter comprises at least one of:
a prediction parameter of RRM of the UE;
a prediction parameter of the UE continuing to camp on a serving cell; or
a prediction parameter of the UE accessing a neighboring cell.

9. The method according to any one of claim 1, wherein the AI prediction result comprises at least one of:
at least part of an AI prediction result of all available cells;
at least part of an AI prediction result of a corresponding cell satisfying the trigger event;
at least part of an AI prediction result of a cell configured by a network;
at least part of a best AI prediction result among AI prediction results in cells configured by the network; or
at least part of an AI prediction result of a prediction parameter of a service type of the UE in prediction parameters.

10. The method according to claim 2, wherein the trigger event comprises one of:
a trigger event for a comparison of the AI prediction result to at least one threshold; or
a trigger event for a comparison of different AI prediction results.

11. The method according to claim 4, wherein triggering the UE to report the first information required by the network, comprises:
triggering the UE to report first information indicated to be reported in the configuration information.

12. The method according to claim 11, wherein the configuration information comprises:
a number of reports, indicating that the number of reports is N, wherein the N is an integer greater than 0; and
an interval indication, indicating an interval time for reporting.

13. The method according to claim 4 or 12, wherein triggering the UE to report the first information required by the network, comprises one of:
triggering the UE to report the first information required by the network once; or
triggering the UE to periodically report the first information required by the network.

14. The method according to claim 4, wherein triggering the UE to report the first information required by the network in response to determining that the AI prediction result satisfies the trigger event for reporting of the network configuration, comprises one of:
in response to an AI prediction result of a prediction object satisfying the entering condition for the trigger event within the trigger time or the number of triggers, reporting the corresponding AI prediction result of the prediction object satisfying the entering condition.

15. The method according to claim 4, wherein the configuration information further comprises: a candidate cell identifier of the CHO.

16. The method according to claim 15, wherein triggering the UE to perform the CHO procedure in response to determining that the AI prediction result satisfies the trigger event for the CHO of the network configuration, comprises:
in response to an AI prediction result of the candidate cell satisfying the entering condition for the trigger event within the trigger time or the number of triggers, triggering the UE to perform the CHO procedure based on the candidate cell.

17. A method for communication processing, performed by a network device, comprising:
transmitting a network configuration;
wherein the network configuration and an artificial intelligence AI prediction result obtained by a user equipment UE are used by the UE for triggering the UE to perform an operation corresponding to the network configuration in response to determining that the AI prediction result satisfies the network configuration.

18. The method according to claim 17, wherein transmitting the network configuration comprises:
transmitting configuration information of the network configuration; wherein the configuration information comprises one or more of:
a trigger event; wherein the trigger event comprises a trigger event for reporting or a trigger event for conditional handover CHO;
a threshold value of the trigger event;
a hysteresis value of a threshold in the trigger event;
a trigger time or a number of triggers;
an entering condition for the trigger event;
a leaving condition for the trigger event; or
a candidate cell identifier of the CHO.

19. The method according to claim 18, wherein,
the trigger event and the AI prediction result obtained by the UE are used by the UE for triggering the UE to perform an operation corresponding to the trigger event in response to determining that the AI prediction result satisfies the trigger event.

20. The method according to claim 18, wherein the configuration information comprises:
a number of reports, indicating that the number of reports is N, wherein the N is an integer greater than 0; and
an interval indication, indicating an interval time for reporting.

21. The method according to claim 18 or 19, further comprising:
receiving first information required by a network reported by the UE in response to determining that the AI prediction result satisfies the trigger event.

22. The method according to claim 21, wherein the first information comprises:
the AI prediction result and/or a result of radio resource management RRM measurement.

23. An apparatus for communication processing, applied to a user equipment UE, comprising:
a processing module, configured to trigger the UE to perform an operation corresponding to a network configuration in response to an artificial intelligence AI prediction result satisfying the network configuration.

24. The apparatus according to claim 23, wherein configuration information further comprises:
information on a trigger event; wherein the trigger event comprises a trigger event for reporting or a trigger event for conditional handover CHO;
a threshold value of the trigger event;
a hysteresis value of a threshold in the trigger event;
a trigger time or a number of triggers;
an entering condition for the trigger event; or
a leaving condition for the trigger event.

25. The apparatus according to claim 24, wherein,
the processing module is configured to trigger the UE to perform an operation corresponding to the trigger event in response to the AI prediction result satisfying the trigger event of the network configuration.

26. The apparatus according to claim 25, wherein,
the processing module is configured to trigger the UE to report first information required by a network in response to determining that the AI prediction result satisfies the trigger event for reporting of the network configuration; or,
the processing module is configured to trigger the UE to perform a CHO procedure in response to determining that the AI prediction result satisfies the trigger event for the CHO of the network configuration.

27. The apparatus according to claim 26, wherein the first information includes:
the AI prediction result and/or a result of radio resource management RRM measurement.

28. The apparatus according to any one of claims 23 to 26, wherein the AI prediction result comprises: a prediction result for at least one prediction object and a prediction parameter.

29. The apparatus according to claim 28, wherein the prediction object comprises: a cell identity or a frequency point.

30. The apparatus according to claim 28, wherein the prediction parameter comprises at least one of:
a prediction parameter of RRM of the UE;
a prediction parameter of the UE continuing to camp on a serving cell; or
a prediction parameter of the UE accessing a neighboring cell.

31. The apparatus according to any one of claims 23 to 30, wherein the AI prediction result comprises at least one of
at least part of an AI prediction result of all available cells;
at least part of an AI prediction result of a corresponding cell satisfying the trigger event;
at least part of an AI prediction result of a cell configured by the network;
at least part of a best AI prediction result among AI prediction results in cells configured by the network; or
at least part of an AI prediction result of a prediction parameter of a service type of the UE in prediction parameters.

32. The apparatus according to claim 24, wherein the trigger event comprises one of:
a trigger event for a comparison of the AI prediction result to at least one threshold; or
a trigger event for a comparison of different AI prediction results.

33. The apparatus according to claim 26, wherein,
the processing module is configured to trigger the UE to report first information indicated to be reported in the configuration information.

34. The apparatus according to claim 33, wherein the configuration information comprises:
a number of reports, indicating that the number of reports is N, wherein the N is an integer greater than 0; and
an interval indication, indicating an interval time for reporting.

35. The apparatus according to claim 26 or 34, wherein,
the processing module is configured to trigger the UE to report the first information required by the network once; or,
the processing module is configured to trigger the UE to periodically report the first information required by the network.

36. The apparatus according to claim 26, wherein,
the processing module is configured to in response to an AI prediction result of a prediction object satisfying the entering condition for the trigger event within the trigger time or the number of triggers, reporting the corresponding AI prediction result of the prediction object satisfying the entering condition.

37. The apparatus according to claim 26, wherein the configuration information further comprises: a candidate cell identifier of the CHO.

38. The apparatus according to claim 37, wherein,
the processing module is configured to in response to an AI prediction result of the candidate cell satisfying the entering condition for the trigger event within the trigger time or the number of triggers, trigger the UE to perform the CHO procedure based on the candidate cell.

39. An apparatus for communication processing, applied to a network device, comprises:
a transmission module, configured to transmit a network configuration;
wherein the network configuration and an artificial intelligence AI prediction result obtained by a user equipment UE are used by the UE for triggering the UE to perform an operation corresponding to the network configuration in response to determining that the AI prediction result satisfies the network configuration.

40. The apparatus according to claim 39, wherein the transmission module is configured to transmit configuration information of the network configuration; wherein the configuration information comprises one or more of:
a trigger event; wherein the trigger event comprises a trigger event for reporting or a trigger event for conditional handover CHO;
a threshold value of the trigger event;
a hysteresis value of a threshold in the trigger event;
a trigger time or a number of triggers;
an entering condition for the trigger event;
a leaving condition for the trigger event; or
a candidate cell identifier of the CHO.

41. The apparatus according to claim 40, wherein,
the trigger event and the AI prediction result obtained by the UE are used by the UE for triggering the UE to perform an operation corresponding to the trigger event in response to determining that the AI prediction result satisfies the trigger event.

42. The apparatus according to claim 40, wherein the configuration information comprises:
a number of reports, configured to indicate that the number of reports is N, wherein the N is an integer greater than 0; and
an interval indication, indicating an interval time for reporting.

43. The apparatus according to claim 40 or 41, further comprising:
receiving first information required by a network reported by the UE in response to determining that the AI prediction result satisfies the trigger event.

44. The apparatus according to claim 43, wherein the first information comprises:
the AI prediction result and/or a result of radio resource management RRM measurement.

45. A device for communication, comprising:
a processor;
a memory for storing instructions executable by the processor;
wherein the processor is configured to implement the method for communication processing according to any one of claims 1 to 16 or 17 to 22 when running the executable instructions.

46. A computer storage medium, wherein the computer storage medium stores a computer executable program, and when the executable program is executed by a processor, the method for communication processing according to any one of claims 1 to 16 or 17 to 22 is implemented.
